# EUROPEAN PATENT SPECIFICATION

(11) **EP 1 793 477 B1**
(45) Date of publication and mention of the grant of the patent: **15.02.2012**
(21) Application number: 05257430.8
(22) Date of filing: 02.12.2005
(51) Int. Cl.: H02K 7/06, F16H 25/22, B62D 5/04, B64C 13/50

(54) **Fault-tolerant electro-mechanical actuator having a torque sensing control system**
Fehlertoleranter elektromechanischer Aktuator mit Drehmomentsensor- und Steuerungssystem
Actionneur électromagnétique tolérant aux défauts avec système de détection et de contrôle de couple

(43) Date of publication of application: 06.06.2007
(73) Proprietor: The Boeing Company, Chicago, IL 60606-1596 (US)
(72) Inventor: Blanding, David E, Hawthorne, CA 90250 (US); Watanabe, Atsuo J, Gardena, CA 90247 (US)
(74) Representative: Pluckrose, Anthony William

(56) References cited:
- EP-A- 1 394 014
- EP-A- 1 524 188
- DE-A1- 10 335 694
- DE-U1- 20 213 740
- FR-A- 2 430 650
- GB-A- 2 384 480
- US-A- 4 375 770
- US-A- 4 637 272
- US-A1- 2004 007 923
- US-A1- 2005 252 318
- US-B1- 6 343 671
- CROKE S ET AL: "More electric initiative-power-by-wire actuation alternatives" AEROSPACE AND ELECTRONICS CONFERENCE, 1994. NAECON 1994., PROCEEDINGS OF THE IEEE 1994 NATIONAL DAYTON, OH, USA 23-27 MAY 1994, NEW YORK, NY, USA,IEEE, 23 May 1994 (1994-05-23), pages 1338-1346, XP010122290 ISBN: 0-7803-1893-5
- PATENT ABSTRACTS OF JAPAN vol. 010, no. 324 (P-512), 5 November 1986 (1986-11-05) -& JP 61 130837 A (KUBOTA LTD), 18 June 1986 (1986-06-18)

## Description

### FIELD OF INVENTION

The invention relates generally to electromechanical actuators for controlling movement of mechanical components, devices or machines.

### BACKGROUND OF THE INVENTION

This invention relates to actuators. An "actuator" is defined in the Merriam-Webster's Collegiate Dictionary, Tenth Edition as a mechanical device for moving or controlling something. Actuators perform a myriad of functions and enable many modern conveniences.

Various mobile platforms, e.g. aircraft, buses, trains, ships and various other vehicles, use actuators to perform many functions during operation of the mobile platform. For example, aircraft utilize actuators to control the movement of flaps, spoilers and ailerons in each wing during operation of the aircraft. Actuators in the tail of an aircraft control the rudder and elevators, while actuators in the fuselage open and close the doors that cover the landing gear bays. Additionally, actuators are utilized to raise and lower the landing gear of the aircraft and actuators on each engine control thrust reversers by which the plane is decelerated.

In addition to uses in mobile platforms, such as aircraft, actuators are used in computer disk drives to control the location of the read/write head on which data is stored and read from the disk. Actuators are used in robots, i.e., in automated factories to assemble products. Actuators operate brakes on vehicles; open and close doors; raise and lower railroad gates and perform numerous other tasks of everyday life.

Prior art actuators fall into two general categories: hydraulic and electric, with the difference between the two categories being the motive force by which movement or control is accomplished. Hydraulic actuators require a pressurized, incompressible working fluid, usually oil. Electric actuators use an electric motor, the shaft rotation of which is used to generate a linear displacement using some type of transmission.

A drawback with hydraulic actuators is the plumbing required to distribute and control the pressurized working fluid. For example, in an aircraft, a pump that generates high-pressure working fluid and the plumbing required to route the working fluid add weight and increase design complexity because the hydraulic lines must be carefully routed.

Electric actuators, which are powered and controlled by electric energy, require only wires to operate and control but a drawback with prior art electrical actuators can be their reliability. Windings of electrical motors are susceptible to damage from heat and water. Bearings on motor shafts wear out. The transmission between the motor and the load, and which is inherently more complex than the piston and cylinder used in a hydraulic actuator, is also susceptible to wear and tear, and eventually to failure. While electrical actuators have advantages over hydraulic actuators, an electrically-powered actuator that provides increased reliability, would be a significant improvement over the prior art. Fault-tolerance, i.e., the ability to sustain one or more component failures or faults and remain operational, would also provide an improvement over prior art electrical actuators.

US 4,637,272 discloses a ballscrew actuator with drive units that provide a level of redundancy.

DE 103,35,694, US 2004/007923, US 4,375,770, and US 6,343,671 disclose similar actuators. The international application published as WO 2008/057106 and designating the European patent office is part of the prior-art under Article 54(3) EPC. It discloses a fault tolerant electromechanical actuator.

### SUMMARY OF INVENTION

According to the present invention, there is provided an electrically-powered linear actuator as defined by claim 1.

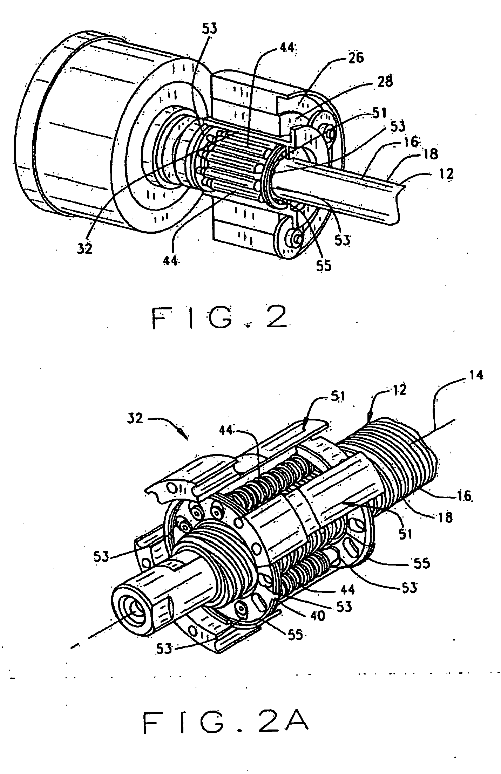

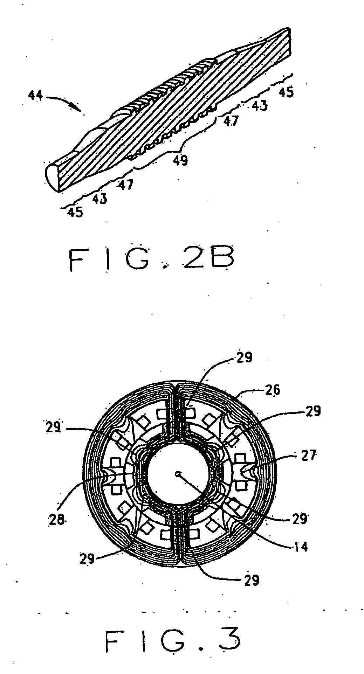

A fault-tolerant, electrically-powered actuator uses two or more, independent integrated motor modules in the same housing to drive an output ram that can be extended from and retracted into a housing that encloses the electric motor modules that drive the ram into and out of the housing. The integrated motor module (FIG. 2) is defined as a unit that consists of one or more electric motor armature/field unit that provide the driving function for an engaged or active roller screw nut assembly. The roller screw nut assembly (FIG. 2A) consists of helical threaded rollers, nut assembly directly coupled to a common screw shaft. The ram's outside surface is threaded. Since the output ram is threaded, the ram can moved into or out of the housing by the rotation of one or more "drive nuts" that engage the threads of the output ram and which are rotated themselves but laterally fixed in place such that the output ram moves laterally on the rotation of the drive nut.

The "drive nut" is provided by roller screws that make up part of the motor's armature and which engage the threads on the output ram. When this "drive nut" rotates, its rotation causes the output ram to translate, i.e., move into or out of the housing. Reliability and fault tolerance are provided by the multiple motors and a drive nut armature in each motor that enables each motor to be separately disengageable and/or engageable.

In various embodiments of the present invention an electromechanical actuator (EMA) is provided. The EMA includes a threaded output ram connectable to a mechanical component and at least one motor module engageable with the output ram for controllably translating the output ram along a linear axis of the output ram. The actuator further includes a torque sensing adaptive control (TSAC) system for monitoring torque within the motor module. The TSAC generates a disengagement command signal when the TSAC system determines torque within the motor module is outside an allowable motor module torque range. The disengagement command signal initiates disengagement of the motor module from the output ram.

The EMA provides a fault tolerant actuator having low cost, accurate torque sensing system to detect friction within a motor module of the EMA to provide reliable redundancy within the EMA to effectively prevent failure of the actuator and potentially hazardous conditions that could result from such a failure.

In various embodiments of the present invention, the EMA includes a threaded output ram connected to a mechanical component to controllably manipulate movement of the mechanical component. The EMA additionally includes a disengageable motor module engageble with the output ram. The disengageable motor module is operable to bear a load imparted by the output ram and controllably translate the output ram along a linear axis of the output ram. Furthermore, the EMA includes a non-disengageable motor module engaged with the output ram. The non-disengageable motor module provides a backup motor module operable to bear the load imparted by the output ram and controllably translate the output ram along a linear axis of the output ram should the disengageable motor module be disengaged from the output ram. Still further, the EMA includes a torque sensing adaptive control (TSAC) system for monitoring motor module torque within the disengageable motor module. If the TSAC system determines torque within the disengageable motor module is outside a first allowable torque range, the TSAC system initiates disengagement of the disengageable motor module from the output ram. Substantially simultaneously with disengagement of the disengageable motor module, the non-disengageable motor module is energized to bear the load imparted by the output ram and controllably translate the output ram along a linear axis of the output ram.

The EMA provides a smooth operating fault tolerant actuator having reliable redundancy to effectively prevent failure of the actuator.

Various preferred features and embodiments of the invention are set out in the claims, the content of which should be considered part of the description.

### BRIEF DESCRIPTION OF THE DRAWINGS

Figure 1 is a cross-sectional view of an fault-tolerant electrical/electromechanical actuator (EMA), in accordance with various embodiments of the invention;
Figure 1A is a schematic of a mobile platform including the EMA shown in Figure 1, in accordance with various embodiments of the present invention;
Figure 2 is a perspective, partial sectional view of a motor module included in the actuator shown in Figure 1, showing a view of a roller screw nut to be used as the armature of an electrical motor used in the fault tolerant electrical actuator and showing a release clutch;
Figure 2A is an isometric sectional view of a roller nut assembly included as a portion of an armature of the motor module shown in Figure 2, the armature of which engages the output ram of the electrical actuator;
Figure 2B is a cross-sectional perspective view of a helical threaded roller included in the roller nut shown in Figure 2A;
Figure 3 is an end view depicting the electrical poles of the stator and armature of the electric motor module shown in Figure 2,the armature of which engages the output ram of the electrical actuator;
Figure 4 is a perspective sectional view of a motor module included in the electrical actuator shown in Figure 1 and a portion of the output ram;
Figure 4A is a perspective sectional view of a portion of the roller nut shown in Figure 2A, illustrating a ramp and lock mechanism in a first position;
Figure 4B is a perspective sectional view of the portion the roller nut shown in Figure 4A, illustrating a ramp and lock mechanism in a second position;
Figure 5 shows an fault-tolerant actuator with crank arm driving a drive shaft;
Figure 6 shows a fault-tolerant actuator with a flight control surface of an aircraft; and
Figure 7 shows a fault-tolerant actuator with a vehicle steering system;

### DETAILED DESCRIPTION OF INVENTION

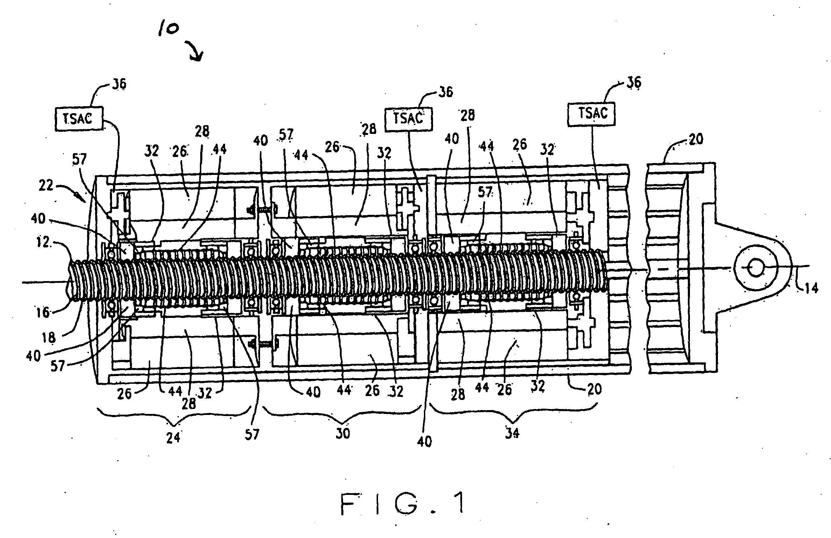

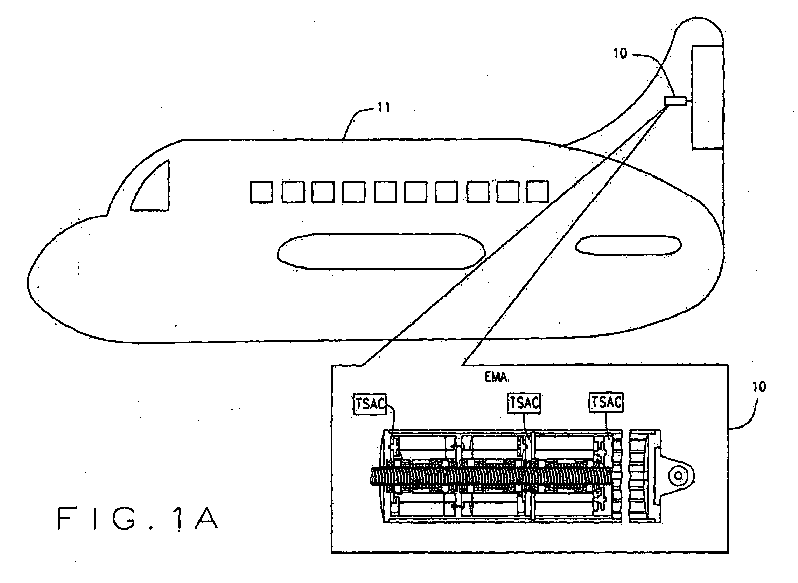

Figure 1 is a cross-sectional view of an electrically powered and fault tolerant electrical actuator 10, in accordance with various embodiments. The fault tolerant electrical actuator 10 can be utilized in various applications to control the movement of one or more mechanical components, devices or machines. For example, the fault tolerant electrical actuator 10 can be implemented in a mobile platform 11, exemplarily shown as an aircraft, to control the movement of mobile platform control mechanisms or surfaces. For example, the mobile platform 11 can be an aircraft that utilizes the fault tolerant electrical actuator 10 to control the movement of flaps, spoilers and ailerons in each wing during operation of the aircraft. Although mobile platform 11 is illustratively shown as an aircraft, the mobile platform 11 can be any mobile platform inclusive of, but not limited to, an aircraft, a bus, a train or a ship.

Generally, the actuator 10 is comprises a cylindrically- shaped housing 20 that encloses two or more integrated electrical motor modules (three shown) 24, 30 and 34 that each include a roller nut 32 (or "drive nut") that can drive an output ram 12, the exterior surface 16 of which is helically threaded. Helical threads 18 (also referred to as "threads") on the output ram 12 surface are threaded into one or more of the roller nuts 32 within the housing. The roller nuts 32 (or "drive nuts") can engage the threaded output ram 12 and rotate about the output ram 12, but are laterally fixed in the housing, i.e., the roller nuts 32 cannot move along the length of the output ram 12. Therefore, when the roller nuts 32 are rotated about the output ram 12, the output ram 12 will be laterally moved along a longitudinal central axis 14 of the output ram 12. When the end of the output ram (not shown in Figure 1) is connected to a mechanical component, device or machine, such as an aircrafts control surface, lateral movement of the ram 12 operates or controls the mechanical component to which the output ram 12 is coupled.

The output ram 12 can be extended from and retracted into the housing simply by controlling the direction of rotation of at least one of the roller nuts 32 that engages the threaded surface 16. The roller nut 32 rotation direction is readily changed by the electrical power provided to field windings 26 of the motor modules 24, 30 and 34 that drive the output ram 12.

The ram 12 has a central axis 14, owing to the fact that it is cylindrically shaped. More particularly, the exterior surface 16 of the output ram 12 includes the helical threads 18, such that the ram 12 can be considered to be "threaded" as is a bolt or screw. The helical threads 18 enable the ram 12 to be axially moved by engaging the threads 18 of the output ram 12 with a rotating roller nut 32 of at least one motor module 24, 30 and 34 within the housing 20. The roller nut 32 of each motor module 24, 30 and 34 is structured and arranged to rotate about the axis 14 and engage to the threads 18, but is laterally fixed within the respective motor module 24, 30 and 34 in the housing 20. That is, the roller nuts 32 cannot move along the axis 14 of the output ram 12. The pitch of the threads 18 will affect the speed of output ram 18 (i.e., the rate at which it travels axially) as well as the load exerted on each of the motor modules 24, 30 and 34.

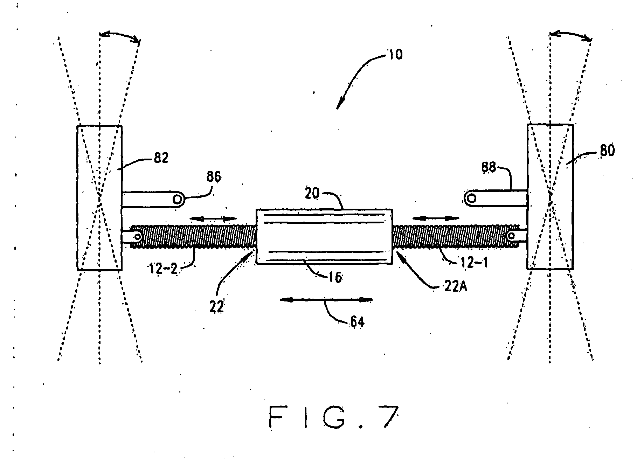

As shown in Figure 1, the housing 20 has at least one opening 22 in one end through which the output ram 12 can extend and retract so as to impart control or movement to a mechanical component, device, machine or machine part (not shown in Figure 1). In at least one embodiment illustratively shown in Figure 7, the actuator 10 includes a double-acting output ram 12. Accordingly, the housing 20 includes a second opening 22A opposite the first opening 22. For clarity and simplification, the second opening 22A is not shown in Figure 1.

Each motor module 24, 30 and 34 has a stator 26, also known as a field or field winding shown in cross section in Figure 1. As is well known, application of an electrical current to the field winding 26 will induce one or more magnetic fields that extend into an armature 28 of the respective motor module 24, 30 and 34, thereby causing the armature 28 to rotate. As well known in the art, an armature is also commonly referred to as a rotor, and the two terms will be used interchangeably herein. Each field winding 26 lies against the inside wall of the cylinder-shaped housing 20, which also acts as a heat sink for the motor windings. The structure of the armature 28 of each motor module 24, 30 and 34 is such that each roller nut 32 functions as a portion of the armature 28 of each motor module 24, 30 and 34. More specifically, the armature 28 of each motor module 24, 30 and 34 includes the roller nut 32 that includes a plurality of threaded rollers 44 engageable with the threads 18 of the output ram 12. The threaded rollers 44 can engage the threads 18 and can rotate about the output ram 12, but are laterally fixed. Therefore, the roller nut 32 of each motor module 24, 30 and 34 acts as the armature 28 caused to rotate by the magnetic field generated by the respective field 26 and drive the output ram 12. The roller nut 32 is capable of selectively being engaged with and disengaged from the threads 18 on the output ram 12.

Referring now to Figures 1, 2A and 2B, the roller nut 32, of each motor module 24, 30 and 34 includes two or more helical-threaded rollers 44 evenly spaced around the output ram 12, and can be engaged with the threads 18 in the output ram 12. The rollers 44 are held in place laterally, but are freely rotatable around the ram 12 by way of the roller nut (or cage)32 that is laterally restrained in the housing 20. When the rollers 44 are engaged with the output ram 12 and the field 26 is energized, the generated magnetic field causes the roller nut 32 to rotate about the output ram 12. Accordingly, the rollers 44 are caused to rotate around the output ram 12 and exert a lateral force along the longitudinal central axis 14 on the threads 18. The lateral force on the threads 18 cause the ram 12 to move laterally along the central axis 14.

Referring to Figure 2A, 2B, 3 and 4, in various embodiments, the roller nut 32 includes bearing caps 55 at opposing ends that radially separate two or more, helically-threaded rollers 44 that mate and can be engaged with the threads 18 in the output ram 12. The threads of the rollers 44 are sized and shaped to mate with the threads 18 on the surface 16 of the output ram 12 such that the rollers 44 can smoothly rotate about the output ram 12. Those of skill in the art will appreciate that roller thread pitch should match the thread pitch of the output ram 12. The electrical representation of one of the motor modules 24, 30 or 34, shown in Figure 3, illustrates that the roller nut 32 with the included rollers 44 functions as an armature. The armature 28 has six poles 29 around the axis 14 that correspond to one of a plurality of band sections 51 extending between bearing caps 55. Each pole 29 acts to enclose a roller 44 and provide a path for magnetic lines of flux. The armature structure 28, i.e., the roller nut 32, will rotate in response to the magnetic fields created about the armature 28 by the stator 26. Rotation of the roller nut 32 causes the rollers 44 to rotate about the central axis 14. Those of skill in the art will recognize that when engaged with the output ram 12, the rollers 44 will also rotate about their axes of rotation albeit in the opposite direction than the rotation of the roller nut 32.

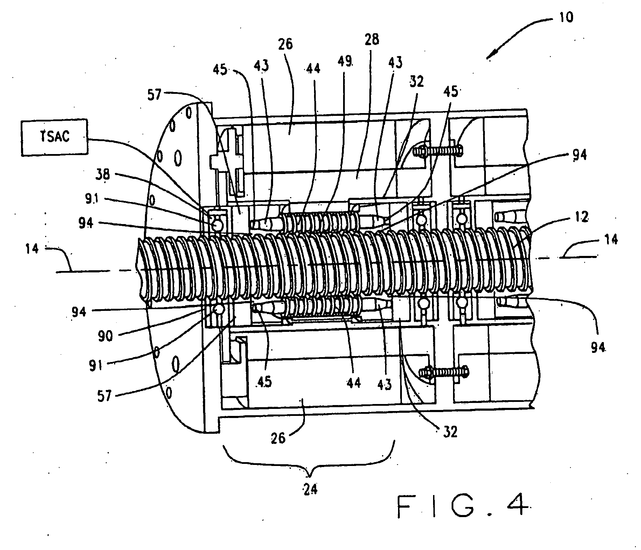

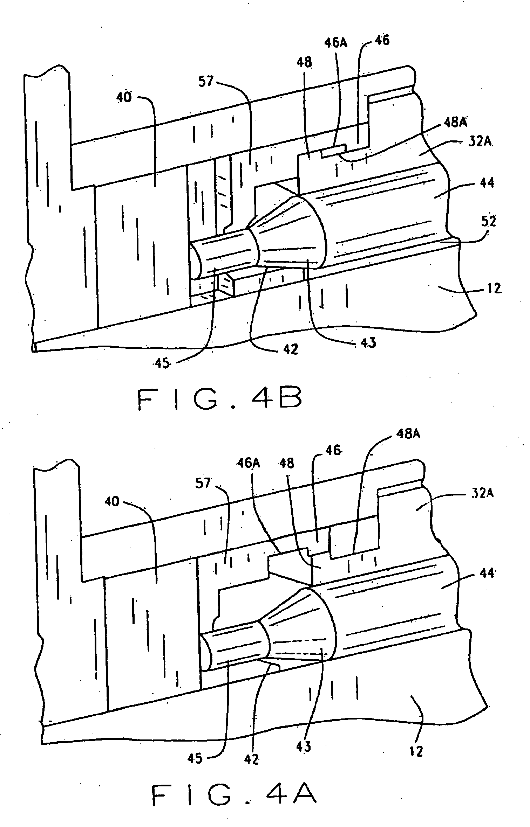

The band sections 51 run parallel to the rollers 44 and carry magnetic flux lines, strengthen the roller nut 32, and help maintain the radial separation between the rollers 44. The rollers 44 include journal bearing sections 45 at the ends of each roller 44, a central threaded section 49, and taper sections 43 just inside the journal bearing sections 45. The journals bearing sections 45 ride in small bearing holes 53 in the opposing bearing caps 55 at each end of the rollers 44. The opposing bearing caps 55 freely rotate about the output ram 12 and do not engage the threads in the output ram 12. As described further below, each of the bearing caps 55 includes a disengaging cam 40 and a ramp and lock mechanism 57 that are interactive with the taper sections 43 of each roller 44 to disengage the respective rollers 44 from the helical threads 18 of the output ram 12. Generally, the rollers 44 are disengaged using a complementary taper 42 in the ramp and lock mechanisms 57, best seen in Figure 4A, which slides "under" the taper section 43, causing the roller 44 to be lifted upward, disengaging the roller 44 from the output ram 12. Thus, the bearing caps 55, i.e., the ramp and lock mechanisms 57, of a motor module 24, 30 and/or 34 are urged toward each other to disengage the respective rollers 44 if the respective motor module 24, 30 and/or 34 fails.

During operation, the fault-tolerant electromechanical actuator or "EMA" 10 generates signals such as voltage, current, speed and position of the armature/roller nut 32. The EMA 10 includes at least one torque sensing adaptive controller (TSAC) system 36, shown in Figure 12, that monitors such things as the voltage, current and armature speed of each motor module 24, 30 and 34, and output ram position to detect when an improper torque is being developed by one or more of the motor modules 24, 30 and/or 34. For example, the TSAC system can detect improper torque caused by excessive friction, indicative of fouling or failure a motor module 24, 30 or 34 that is engaged with the output ram 12, by sensing an unusually- high current drawn by the respective motor module 24, 30 and/or 34.

Referring to Figures 1, 4, 4A and 4B, friction within each motor module 24, 30 and 34 of the EMA 10 is effectively constant and referred to as the Coulomb friction torque. The threads 18 of the output ram 12 and the mating threads of the roller 44 illustrated in Figures 4A and 4B have been removed for simplicity and clarity. However, Figure 4A clearly illustrates the ramp and lock mechanism 57 in a first position whereby the roller 44 is engaged, i.e., in contact, with the output ram 12. Similarly, Figure 4B clearly illustrates the ramp and lock mechanism 57 in a second position whereby the roller 44 is disengaged, i.e., not in contact, with the output ram 12 such that an intercostal gap 52 exists between the roller 44 and the output ram 12. Additionally, for clarity and simplicity, Figures 4A and 4B only illustrate a single roller 44, but it should be understood that description herein referring to Figures 4A and 4B is applicable to all rollers 44 included in each motor module 24, 30 and 34.

At zero relative rotational speed, the friction torque of a motor module 24, 30 or 34 is equal and opposite to the torque applied by the magnetic field generated by the stator 26, unless the applied torque is larger than the stiction torque. The stiction torque is the torque at the moment of breakaway and is larger than the Coulomb torque. If a motor module 24, 30 and/or 34 fails, e.g., a motor module 24, 30 and/or 34 binds, jams, is contaminated or has excessive wear, improper, e.g., excessive, frictional or stiction torque is detected by the TSAC system 36. The EMA 10 will be described herein as including a plurality of TSAC systems 36 such that a separate, independent TSAC system 36 monitors a respective one of motor modules 24, 30 and 34. However, it should be understood that alternatively, the EMA 10 can include a single TSAC system to substantially simultaneously monitor all the motor modules 24, 30 and 34. Additionally, the TSAC systems 36 can be mounted inside the housing 20 or located remotely from the EMA 10.

In various embodiments, when improper torque is sensed in a motor module 24, 30 and/or 34, the respective TSAC system 36 activates a disengagement actuation device 38, e.g., an electromagnetic coil or piezo electric device, causing a disengaging cam 40 to laterally move the ramp and lock mechanism 57 along the axis 14, thereby disengaging the rollers 44 by lifting the rollers 44 away from the output ram 12.

Referring now to Figure 1, 2, 2A, 2B, 4, 4A and 4B, once the ramp and lock mechanism 57 disengages the rollers 44 of the problematic motor module 24, 30 and/or 34, the ramp and lock mechanism retains the rollers in the disengaged position. More particularly, the ramp and lock mechanism includes a first locking finger 46 that interlocks with a second locking finger 48 in a locking portion 31 of the roller nut 32 when the ramp and lock mechanism 57 is in the second position, whereby the rollers 44 are disengaged from the output ram 12, as shown in Figures 4A and 4B. As seen in Figure 4A, when the ramp and lock mechanism 57 is in the first position with the rollers 44 engaged with the output ram 12, distal ends of the first and second fingers 46 and 48 are in full contact. When the distal ends of the first and second fingers 46 and 48 are in full contact, the rollers 44 are engaged and can not disengage until the disengagement actuation device 38 is actuated to move the ramp and lock mechanism 57 to the second position. When the disengagement actuation device 38 is actuated, disengaging cam 40 pushes the ramp and lock mechanism laterally inward along the axis 14 such that the complementary taper 42 slides under the roller tapered portion 43. As the ramp and lock mechanism 57 moves inward, the interaction between the ramp and lock complementary taper 42 and the roller tapered portion 43 lifts the roller away from the output ram 12. Furthermore, as the ramp and lock mechanism moves inward, the distal ends of the first and second fingers 46 and 48 are moved out of contact with each other and into locking recesses 46A and 46B. Thus, the ramp and lock mechanism 57 is moved to the second position whereby the first and second fingers 46 and 48 are interlocked.

Therefore, when actuated, the disengagement actuation device 38 provides lateral movement of the ramp and lock mechanisms 57 along the axis 14 to lift the rollers 44 from engagement with the output ram 12 and interlock the ramp and lock mechanisms first and second fingers 46 and 48. Thus, the rollers 44 of a motor module 24, 30 and/or 34 can be disengaged from the output ram 12 when the rollers 44 are lifted away from the threads 18, allowing the roller nut 32 to rotate freely about the output ram 12. The rollers 44 are lifted away from the threads 18 using the tapered sections 43 between the straight journal section 45 and the threaded section 49. When the complementary taper 42 in the ramp and lock mechanisms 57 are forced against and under the tapered sections 43, the rollers 44 are moved radially outward, away from the output ram 12 and out of engagement with the threads 18.

A motor can be disengaged from the thread 18 in the output ram 12 when the rollers 44 are lifted away from the threads 18, allowing the cage 50 to rotate freely about the output ram 12. The rollers 44 can be lifted away from the thread 18 using the tapered sections 43 (shown in FIG. 2) between the straight journal section 45 and the threaded section 49. When a complementary taper in the bearing caps 55-1 and 55-2 or in a clutch mechanism, is forced under and against the tapered sections 43, a taper that slides under the tapered sections 43 will cause the roller screws 44 out of engagement with the thread 18.

Many of the aforementioned embodiments are structured so that all of the motor armatures are engaged to the thread 18 in the output ram 12. In those embodiments, a failed motor is disengaged from the output ram 12 when a motor fails using the tapered section 43 and a complementary taper in the bearing cap 55-1 and 55-2 or a clutch. A roller 44 that is initially disengaged using the tapered sections can thereafter be engaged to the thread 18 by backing a complementary taper away from the taper section 43 in the roller 44. In alternate embodiments, wherein not all motors are initially engaged, a failed motor is disengaged as describe above with a back-up or motor being engaged to the output ram 12 by *lowering* the rollers so that it can operate the actuator 10.

FIG. 4 better illustrates the ramp and lock mechanism 57 at both ends of the cage 50, which prevent the cage 50 from moving laterally. As shown in FIG. 4, complementary tapers 58 in the ramp and lock mechanism 57 will lift the roller screw 44 out of engagement if the ramp and lock mechanism 57 is urged toward the roller screw 44. The displacement of the ramp and lock mechanism is controlled by an electromagnetic actuator and microprocessor.

Whether the ram 12 extends away from the housing 20 or retracts into the housing 20 is determined by the armature's rotation direction. The armature's rotation direction is in turn determined electrically. Therefore, the output ram 12 of the actuator 10 can be moved in different directions simply by changing the electrical power source.

In some embodiments, to activate the ramp and lock mechanisms 57 when improper torque is sensed in a motor module 24, 30 or 34, the TSAC system 36 of the respective motor module 24, 30 or 34 applies a voltage/current to a coil 90 of the respective disengagement actuation device 38. The coil 90 becomes an electromagnet and produces a magnetic line of flux that is transferred through small air gaps in a thrust bearing 91 to an opposing magnetic field on the ramp and lock mechanisms 57. As the current increases, the magnetic flux builds causing the ramp and lock mechanisms 57 to move such that the rollers 44 are lifted upward and away from contacting the threads 18 of the output ram 12. When the rollers 44 are disengaged, the ramp and lock mechanisms 57 is locked in place eliminating the respective motor module 24, 30 or 34 from contact with the output ram 12. When a motor module 24, 30 and/or 34 is operating to drive the output ram 12, the ramp and lock mechanisms 57 is free of any magnetic contact with the electrical coil 90 and the rollers 44 are fully engaged with the output ram 12.

Referring now to Figures 1 and 4, in various embodiments, the roller nuts 32, i.e., the rollers 44, of all of the motor modules 24, 30 and 34 in the housing 20 are powered and engaged with the threads 18 in the output ram 12, also referred to herein as the motor modules being engaged with the output ram 12. Therefore, all the motor module(s) 24, 30 and 34 are operating to provide torque used to move the output ram 12 laterally along the axis 14 and share the load presented by the output ram 12. When one or more of the motor modules 24, 30 and/or 34 fails, the respective roller nut(s) 32 is/are disengaged from the output ram 12. More specifically, when the TSAC system 36 of a failing motor module 24, 30 or 34 senses an improper torque level, the TSAC system 36 activates the ramp and lock mechanisms 57 of the respective motor module 24, 30 and/or 34 to disengage the respective roller nut 32 from the output ram 12. When the roller nut 32 of the failing motor module(s) 24, 30 and/or 34 is/are disengaged, also referred to herein as disengaging the motor module, the other motor module(s) 24, 30 and/or 34 that remain engaged with the output ram 12 and operating substantially seamlessly assume the load exerted by the output ram 12 without interference from the disengaged motor module 24, 30 and/or 34.

In various other embodiments, all of the motor modules 24, 30 and 34 are engaged with the output ram 12, but only one motor module 24, 30 or 34 is powered, i.e., operating, to provide torque used to move the output ram 12 laterally along the axis 14. The other motor module(s) 24, 30 or 34 are not operating to drive the load presented by the output ram 12. Thus, the additional engaged, but non-operational, motor module(s) 24, 30 or 34 is/are available as a "back-up" or redundant motor module(s). When the driving motor module 24, 30 or 34 fails, the ramp and lock mechanisms 57 of the failing motor module 24, 30 or 34 is activated to disconnect the respective roller nut 32 from the threads 18 of the output ram 12. More specifically, when the TSAC system 36 of the failing driving motor module 24, 30 or 34 senses an improper torque level, at least one engaged, but non-operating redundant motor module(s) 24, 30 and/or 34 is/are put into operation and the ramp and lock mechanisms 57 of the failing driving motor module 24, 30 or 34 is activated to disengage the respective rofler nut 32. Accordingly, the newly activated redundant motor module(s) 24, 30 and/or 34 that is/are put into operation substantially seamlessly assume(s) the load exerted by the output ram 12 without interference from the disengaged motor module 24, 30 or 34.

In yet other embodiments, two or more motor modules 24, 30 and 34 are engaged with the output ram 12 and powered. Therefore, two or more of the motor modules 24, 30 and 34 are operating to provide torque used to move the output ram 12 laterally along the axis 14 and share the load presented by the output ram 12. A single additional motor module 24, 30 or 34 is also engaged with the output ram 12, but is not operating to drive the load presented by the output ram 12. Thus, the additional engaged, but non-operational motor module 24, 30 or 34 is available as a "back-up" or redundant motor module. When any of driving motor modules 24, 30 or 34 fails, the ramp and lock mechanisms 57 of the failing motor module 24, 30 or 34 is activated to disconnect the respective roller nut 32 from the output ram 12. More specifically, when the TSAC system 36 of the failing driving motor module 24, 30 or 34 senses an improper torque level, the engaged, but non-operating redundant motor module 24, 30 or 34 is activated and the roller nut 32 of the failing driving motor modules 24, 30 or 34 is disengaged. Accordingly, the newly activated redundant motor module 24, 30 or 34 that is put into operation substantially seamlessly assume(s) the load exerted by the output ram 12 without interference from the disengaged motor module 24, 30 or 34.

In still other embodiments, only one motor module 24, 30 or 34 is engaged with the output ram 12 and bears the entire load exerted by the output ram 12. Thus, the additional disengaged, non-operational motor module(s) 24, 30 or 34 is/are available as a "back-up" or redundant motor module(s). When the driving motor module 24, 30 or 34 fails, the ramp and lock mechanisms 57 of the failing motor module 24, 30 or 34 is activated to disconnect the respective roller nut 32 from the output ram 12. More specifically, when the TSAC system 36 of the failing driving motor module 24, 30 or 34 senses an improper torque level, the roller nut(s) 32 of the disengaged, non-operating motor module(s) 24, 30 or 34 is/are engaged with the output ram 12 and the roller nut 32 of the failing driving motor module 24, 30 or 34 is disengaged. Accordingly, the newly activated redundant motor module(s) 24, 30 or 34 that is/are put into operation substantially seamlessly assume(s) the load exerted by the output ram 12 without interference from the disengaged motor module 24, 30 or 34.

Referring now to Figures 1, 2B and 4, in various aforementioned embodiments, one or more of the motor modules 24, 30 and/or 34 is/are initially disengaged. In such embodiments, the disengagement actuation device 38 of the disengaged, redundant, motor module(s) 24, 30 and/or 34 is activated to hold complementary tapers 94 of the ramp and lock mechanisms 57 under the roller tapered sections 43 and retain the roller nut 32 in the disengaged position. When a redundant motor module 24, 30 or 34 is activated, the disengagement actuation device 38 is deactivated such that the complementary tapers 94 of the ramp and lock mechanisms 57 are moved out from under the roller tapered sections 43. Subsequently, one or more biasing devices, e.g., springs, in the roller nut 32 move the rollers 44 radially inward and into contact with the threads 18. Consequently, the roller nut 32 of the respective motor module 24, 30 or 34 is engaged with the output ram 12. That is, the motor module 24, 30 or 34 is engaged and able to provide torque used to move the output ram 12 laterally along the axis 14.

Whether the output ram 12 extends away from the housing 20 or retracts into the housing 20 is determined by the direction of rotation of the roller nut(s) 32, i.e., the armature 28(s), of the motor module(s) 24, 30 and/or 34 engaged with and driving the output ram 12. The rotational direction of the roller nut(s) 32 is determined electrically. Therefore, the extension or retraction of the output ram 12 of the actuator 10 is determined by controlling the power source of the motor modules 24, 30 and 34. More specifically, the power source is controlled such that the rotational direction of each motor module 24, 30 and 34 is controlled, thereby controlling whether the output ram is extended from or retracted into the housing 20.

In addition to changing the output ram's direction electrically, the rotational speed of the roller nut(s) 32 around the output ram 12 can be determined electrically. Therefore, the speed at which the output ram 12 is extended or retracted, can be determined electrically.

Furthermore, for any given motor speed, i.e., roller nut 32 rotational speed, thread pitch of the output ram 12 will affect the displacement speed of the output ram 12. While a greater number of threads per inch will require more motor revolutions per unit of linear displacement, a greater number of the threads per inch will also increase the amount of force exerted by the driving motor module(s) 24, 30 and/or 34 on the output ram 12.

According to the invention the motors are stepper motors.

The ease with which the output ram 12 direction and sped can be changed are but two significant advantages that the actuator 10 has over prior art hydraulic actuators. Fault-tolerance and hence reliability of the actuator 10 is achieved by having multiple motors drive the output ram 12, such that the motors can be disengaged if and when they fail.

As set forth above, fault tolerance is provided by the ability to disengage one motor when it fails so that another motor can continue to operate and take up the load. As can be seen in FIG. 4, the output ram 12 can be engaged and disengaged from the rotor 28 depending on whether the rollers 44 in the armature cage are initially engaged or disengaged with the threads of the output ram 12. The rollers 44 can be disengaged from the output ram and hence the motor 24 disengaged from the output ram 12, by sliding the tapered surface 42 against the tapered sections 43 of the roller screw 44. In so doing, the roller screw 44 is lifted out of engagement with the output ram 12, physically disconnecting the motor from the output ram 12.

The ramp and lock mechanism 57 is forced along the axis of the roller and against the roller 44 by either a mechanical or electrical clutch (not shown), which will force the tapered surface 42 against the roller screw taper 43 or pull the thrust bearing away from the taper section 43, depending on whether the motor is to be disengaged or engaged from the output ram 12. By lifting the roller screw 44 of one motor out of the threads of the output ram 12 the armature 28 of that motor can be disengaged from the ram 12. By lowering the roller screw of a different motor into the threads of the output ram 12, the other motor can be engaged with the output ram 12.

The tapered surface face 42, or any other structure that lifts the rollers 44 away from the output ram or that lowers the roller into engagement with the output ram 12, should be considered to be a roller-engaging/roller-disengaging mechanism that operably couples and de-couples an armature/rotor of a motor with the helical thread and the output ram. In so doing, the thrust bearing, and/or its tapered surfaces in combination with the tapered section of the roller screw act as a mechanism for engaging or disengaging the motors from the output ram 12.

As set forth above in the background of the invention, hydraulic and electrical actuators perform myriad tasks. The electrically powered linear actuator described above can be used in a variety of applications.

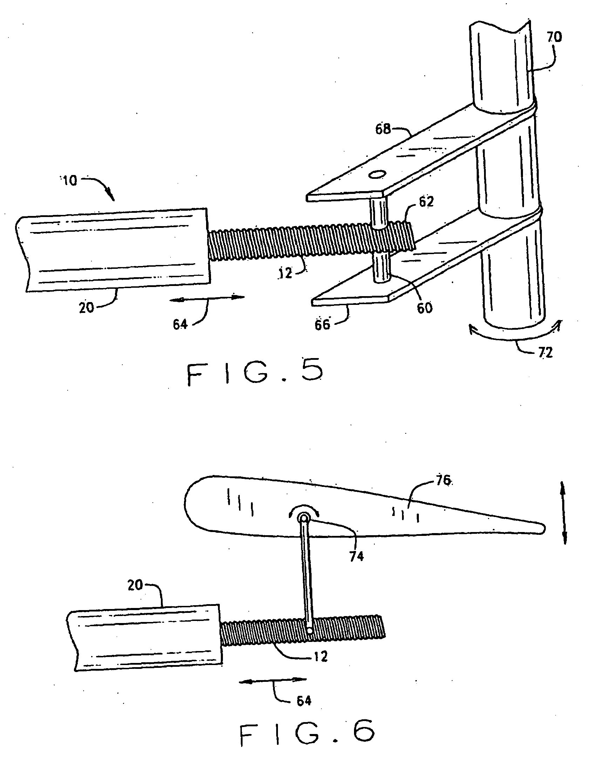

Referring to Figure 5, as is well known, a "journal" is a spindle or shaft that turns in a bearing. In its most general application, a distal end 62 of the output ram 12 of the electrically powered linear actuator 10 is attached to a journal 60 of a crank arm 68. The journal 60 is rotationally accommodated by an opening in the output ram 12 such that the journal 60 can rotate within the opening as the output ram 12 reciprocates, i.e., extends and retracts, as shown by reference numeral 64. As shown, the displacement of the journal 60 at the end of the crank arm 68 will in turn cause a drive shaft 70 of a mechanical component, device, machine or machine part controlled by the actuator 10 to oscillate about its axis of rotation, as indicated by reference number 72.

Referring again to Figure 1, although Figure 1 illustrates three motor modules, i.e., motor modules 24, 30 and 34, included in the actuator 10, it should be understood that the invention should not be so limited. The actuator 10 can include two or more motor modules such as motor modules 24, 30 and 34. It should further be understood that each motor module included in the actuator 10 are functionally and structurally substantially similar, such that the structural and functional description herein is applicable to each and every motor module of the actuator 10.

Additionally, the complementary tapers 94 of the ramp and lock mechanisms 57 in combination with the tapered sections 43 of each roller 44 should be considered to be a roller-engaging/roller-disengaging mechanism that operably engages and disengages the roller nuts 32 a motor module 24, 30 or 34 from the output ram 12.

Aircraft are well known to have wings that are attached to a fuselage. Control surfaces in the wings control the rate of climb and descent, among other things. The tail section attached to the rear of the fuselage provides steering and manoeuvrability. An engine provides thrust and can be attached to the plane at the wings, the tail or the fuselage. Inasmuch as aircraft structures are well known, their illustration is omitted here from for simplicity. Accordingly, the actuator 10 can be utilized to control the movement of flight control surfaces in the wings, tail, landing gear, landing gear bay doors and engine thrust reversers of aircraft. As shown in Figure 6, the output end 62 of the output ram 12 can be coupled to a pivot point 74 of a control surface 76 of an aircraft (not shown for clarity, but well known in the art). Translation (lateral movement along the axis 14) of the output ram 12 in the directions indicated by the arrows 64 causes the control surface 76, e.g., spoilers, flaps, elevators, rudder or ailerons, to move and thereby controls flight of the aircraft. Similar translation can control other flight control surfaces, fuselage doors, landing gear and/or thrust reverses. The safety and reliability of an aircraft might therefore be improved by using the actuator 10 within a wing, fuselage or tail section as needed to operate flight control surfaces, landing gear, landing gear doors as well as an engine thrust reverser.

Referring to Figure 7, in various embodiments, the output ram 12 extends through both ends of the actuator housing 20. One side or end of the output ram 12-1 is connected to a first machine part 80, e.g., linkage of a first steerable wheel of a vehicle. The other side or end 12-2 is connected to a second machine part 82, e.g., linkage of a second steerable wheel of the vehicle. As the output ram 12 translates in the direction indicated in the reference number 64, the first and second machine parts 80 and 82, e.g., the first and second wheels, rotate upon the pivot points or axes 86, 88. Inasmuch as vehicles such as automobiles and trucks are well-known to have at least one steerable wheel, a chassis or frame to which the wheel is rotatably coupled, a body with doors, an engine, transmission, and brakes, all of which are well- known and do not require depiction. A significant weight reduction in such vehicles is possible by replacing a hydraulic actuator with the fault-tolerant actuator 10.

Other embodiments of the electrically powered linear actuator would include use as a power source for a lift for a door by appropriately coupling the output ram 12 to the mechanisms to which loads could be lifted and doors opened.

The ease with which the output ram 12 direction and speed can be changed are some of the significant advantages that the actuator 10 has over prior art hydraulic actuators. Fault-tolerance, and hence reliability, of the actuator 10 is achieved by having multiple motor modules 24, 30 and/or 34 able to drive the output ram 12, such that if a motor module 24, 30 or 34 fails, the failed motor module 24, 30 or 34 can be disengaged and one or more redundant motor module 24, 30 and/or 34 employed to substantially seamlessly assume the load. Thus, by providing two or more motor modules 24, 30 and/or 30 fixed within the housing 20, each of which is engageable with the helically threaded output ram 12, the electrically powered, fault tolerant linear actuator 10 can be realized.

## Claims

1. An electrically-powered linear actuator (10) comprising:
a cylindrical output ram (12) having a central axis (14) and an exterior surface circumscribed by a helical thread;
a housing (20) having a first opening through which the output ram extends and retracts;
a first electric motor (24) fixed in said housing, said first motor providing a first stator (26) around the output ram and a first armature (28) within the stator that rotates about the axis of the output ram (12), said first armature being comprised of a first roller that rotatably engages the helical thread but which does not move axially along the output ram axis (14) such that the first armature's rotation causes the first roller (32) to rotate in the helical thread of the output ram (12), thereby causing the output ram to retract into or extend from the housing (20);
a second electric motor (30) fixed in said housing, said second motor providing a second stator (26) around the output ram and a second armature (28) within the second stator that rotates about the axis of the output ram (12), said second armature being comprised of a roller that releasably rotatably engages the helical thread but which does not move axially along the output ram axis (14) such that the second armature's rotation causes the second roller to rotate in the helical thread of the output ram (12), thereby causing the output ram to retract into or extend from the housing (20); and
an armature releasing mechanism (40), operatively coupled to at least one of the first roller and the second roller operable to release the first or second roller from the output ram (12) to decouple the corresponding armature (28) from the helical thread of the output ram upon the failure of the corresponding motor (24,30),
wherein said first and second motors (24,30) are stepper motors.

2. The electrically-powered linear actuator of claim 1 further including a third electric motor (34) fixed in said housing (20), said third motor (34) providing a third stator around the output ram and a third armature within the third stator that rotates about the axis of the output ram, said third armature being comprised of the third roller (32) that releasably engages the helical thread (18) but which does not move axially along the output ram axis, said third armature being carried in a manner to prevent its axial movement along the output ram axis while permitting its rotation about the output ram axis,
the third armature's rotation causes the third roller to rotate in the helical thread of the output ram, thereby causing the output ram (12) to retract into or extend from the housing when the third armature is engaged with the threaded surface of the output ram; and
at least one armature releasing mechanism, operatively coupled to at least one of the first armature, the second armature and the third armature operable to release the first, second or third roller (32) from the output ram (12) to decouple the corresponding armature from the output ram.

3. The electrically powered linear actuator of claim 1 or 2, wherein said cylindrical output ram (12) has an output end that is distal to the housing (20), and wherein said electrically powered linear actuator is further comprised of at least one of:
a journal (60), a linear displacement of which causes rotation of a machine part;
control surface for an aircraft;
a steerable wheel for a vehicle;
a lift; and
a door;
coupled to the output end of the output ram (20).

4. An actuator of any one of any preceding claim comprising a torque sensing adaptive control (TSAC) system (36) for monitoring motor module torque of the electric motors (24,30) and generating a disengagement command signal to initiate decoupling of an armature from the output ram (12) when the torque within the respective electric motor is outside an allowable motor torque range.

5. An aircraft comprising:
a) two wings, each having an actuator-controllable flight surface;
b) a fuselage to which the two wings are attached;
c) a tail section attached to the fuselage, having at least one actuator-controllable flight surface;
d) at least one engine coupled to at least one of the: the two wings; the fuselage; and the tail section; and
e) an electrically-powered, fault-tolerant actuator according to any preceding claim operatively coupled to at least one of the actuator controllable flight surfaces.

6. A vehicle comprising:
a) a chassis;
b) at least one steerable wheel coupled to the chassis;
c) an electrically-powered, fault-tolerant actuator according to any one of claims 1 to 4 operatively coupled to the at least one steerable wheel.

7. A method of providing fault tolerance to a linear actuator comprising:
providing the electrically-powered linear actuator as claimed in any one of claims 1 to 4;
driving the output ram (12) using at least the first and the second electric motor (24,30);
on the failure of the first motor (24), mechanically de-coupling the first motor from the output ram (12)by releasing the first roller from engagement with the helical thread of the output ram; and
continuing to operate the actuator using the second motor (30).

8. A method of providing fault tolerance to a linear actuator comprising:
providing the electrically powered linear actuator as claimed in any one of claims 1 to 4;
driving the output ram (12) using the first motor (24);
on the failure of the first motor (24), mechanically de-coupling the first motor from the output ram by releasing the first roller from engagement with the helical thread of the output ram;
coupling the second motor (30) to the output ram; and
continuing to operate the actuator using the second motor.

## Patentansprüche

1. Elektrisch angetriebener Linearaktor (10), der Folgendes aufweist:
- eine zylindrische Stellstange (12), die eine Zentralachse (14) und eine, von einem helikalen Gewinde umschriebene, Außenfläche aufweist;
- ein Gehäuse (20) mit einer ersten Öffnung, durch die die Stellstange aus- und eingefahren wird;
- einen ersten Elektromotor (24), der in dem Gehäuse befestigt ist, wobei der erste Motor um die Stellstange herum einen ersten Stator (26) und innerhalb des Stators einen ersten Anker (28) aufweist, der um die Achse der Stellstange (12) rotiert, wobei der erste Anker eine erste Rolle umfasst, die drehbar in das helikale Gewinde eingreift ohne sich axial entlang der Stellstangenachse (14) zu bewegen, so dass eine Drehung des ersten Ankers ein Drehen der ersten Rolle (32) in dem helikalen Gewinde der Stellstange (12) bewirkt und hierdurch ein Einfahren der Stellstange in oder ein Ausfahren der Stellstange aus dem Gehäuse (20) herbeiführt;
- einen zweiten Elektromotor (30), der in dem Gehäuse befestigt ist, wobei der zweite Motor um die Stellstange herum einen zweiten Stator (26) und innerhalb des zweiten Stators einen zweiten Anker (28) aufweist, der um die Achse der Stellstange (12) rotiert, wobei der zweite Anker eine zweite Rolle umfasst, die lösbar und drehend in das helikale Gewinde eingreift ohne sich axial entlang der Stellstangenachse (14) zu bewegen, so dass eine Drehung des zweiten Ankers ein Drehen der zweiten Rolle in dem helikalen Gewinde der Stellstange (12) bewirkt und hierdurch ein Einfahren der Stellstange in oder ein Ausfahren der Stellstange aus dem Gehäuse (20) herbeiführt; und
- einen Ankerfreigabemechanismus (40), der mit der ersten Rolle und/oder der zweiten Rolle wirkverbunden und so betreibbar ist, dass die erste oder zweite Rolle von der Stellstange (12) gelöst wird, um den zugehörigen Anker (28) bei einem Versagen des zugehörigen Motors (24, 30) von dem helikalen Gewinde der Stellstange abzukoppeln,
wobei der erste und der zweite Motor (24, 30) als Schrittmotoren ausgebildet sind.

2. Elektrisch angetriebener Linearaktor nach Anspruch 1, der ferner einen dritten Elektromotor (34) aufweist, der im Gehäuse (20) befestigt ist, wobei der dritte Motor (34) um die Stellstange herum einen dritten Stator und innerhalb des dritten Stators einen dritten Anker aufweist, der um die Achse der Stellstange rotiert, wobei der dritte Anker eine dritte Rolle (32) umfasst, die lösbar in das helikale Gewinde (18) eingreift ohne sich axial entlang der Stellstangenachse zu bewegen, wobei der dritte Anker so gefasst ist, dass dessen axiale Bewegung entlang der Stellstangenachse unter Zulassung einer Drehung um die Stellstangenachse unterbunden ist,
wobei eine Rotation des dritten Ankers, wenn der dritte Anker in die Gewindeoberfläche der Stellstange eingreift, ein Drehen der dritten Rolle in dem helikalen Gewinde der Stellstange bewirkt und hierdurch ein Einfahren der Stellstange (12) in oder ein Ausfahren der Stellstange aus dem Gehäuse herbeiführt; und wenigsten einen Ankerfreigabemechanismus, der mit dem ersten Anker und/oder dem zweiten Anker und/oder dem dritten Anker wirkverbunden und so betreibbar ist, dass die erste, zweite oder dritte Rolle (32) von der Stellstange (12) gelöst wird, um den zugehörigen Anker von der Stellstange abzukoppeln.

3. Elektrisch angetriebener Linearaktor nach Anspruch 1 oder 2, worin die zylindrische Stellstange (12) ein distal zum Gehäuse (20) angeordnetes Stellende aufweist, und worin der elektrisch angetriebene Linearaktor mit dem Stellende der Stellstange (12) verbunden ferner zumindest eines von Folgendem aufweist:
- einen Achsschenkel (60), dessen lineare Auslenkung eine Drehung eines Maschinenteils bewirkt;
- ein Steuerruder eines Luftfahrzeugs;
- ein Lenkrad für ein Fahrzeug;
- einen Lift; und
- eine Tür.

4. Aktor nach einem der vorhergehenden Ansprüche, der ein System (36) zur adaptiven Steuerung mit Drehmomenterfassung (TSAC) zum Überwachen der Motormoduldrehmomente der Elektromotoren (24, 30) und zum Erzeugen eines Freigabeanweisungssignals zum Initiieren eines Entkoppelns eines Ankers von der Stellstange (12), wenn sich das Drehmoment innerhalb des entsprechenden Elektromotors außerhalb eines zulässigen Motordrehmomentbereichs befindet.

5. Luftfahrzeug, das Folgendes aufweist:
a) zwei Tragflächen, von denen jede eine aktorsteuerbare Flugsteuerfläche aufweist;
b) einen Rumpf, an dem die Tragflächen befestigt sind;
c) einen am Rumpf befestigten Heckabschnitt, der wenigstens eine aktorsteuerbare Flugsteuerfläche aufweist;
d) wenigstens einen Motor, der zumindest mit beiden Tragflächen und/oder dem Rumpf und/oder dem Heckabschnitt verbunden ist; und
e) einen elektrisch angetriebenen, fehlertoleranten Aktor nach einem der vorhergehenden Ansprüche, der mit zumindest einer der aktorsteuerbaren Flugsteuerflächen wirkverbunden ist.

6. Fahrzeug, das Folgendes aufweist:
a) eine Karosserie;
b) zumindest ein mit der Karosserie verbundenes Lenkrad;
c) einen elektrisch angetriebenen, fehlertoleranten Aktor nach einem der Ansprüche 1 bis 4, der mit dem zumindest einem Lenkrad wirkverbunden ist.

7. Verfahren zum Vorsehen einer Fehlertoleranz für einen linearen Aktor, das Folgendes aufweist:
- Bereitstellen eines elektrisch angetriebenen Linearaktors, wie er in einem der Ansprüche 1 bis 4 beansprucht ist;
- Antreiben der Stellstange (12) unter Verwendung von zumindest dem ersten und dem zweiten Elektromotor (24, 30);
- mechanisches Abkoppeln des ersten Motors von der Stellstange (12) durch Lösen der ersten Rolle aus dem Eingriff in das helikale Gewinde der, wenn der erste Motor versagt; und
- Weiterführen des Aktorbetriebs unter Verwendung des zweiten Motors (30).

8. Verfahren zum Vorsehen einer Fehlertoleranz für einen linearen Aktor, das Folgendes aufweist:
- Bereitstellen eines elektrisch angetriebenen Linearaktors, wie er in einem der Ansprüche 1 bis 4 beansprucht ist;
- Antreiben der Stellstange (12) unter Verwendung des ersten Motors (24);
- mechanisches Abkoppeln des ersten Motors von der Stellstange (12) durch Lösen der ersten Rolle aus dem Eingriff in das helikale Gewinde der Stellstange, wenn der erste Motor versagt; und
- Verbinden des zweiten Motors (30) mit der Stellstange; und
- Weiterführen des Aktorbetriebs unter Verwendung des zweiten Motors.

## Revendications

1. Actionneur linéaire à commande électrique (10) comprenant:
un plongeur de sortie cylindrique (12) comportant un axe central (14) et une surface extérieure circonscrite par un filetage hélicoïdal;
un boîtier (20) présentant une première ouverture à travers laquelle le plongeur de sortie s'étend et se rétracte;
un premier moteur électrique (24) fixé dans ledit boîtier, ledit premier moteur réalisant un premier stator (26) autour du plongeur de sortie et une première armature (28) dans le stator qui tourne autour de l'axe du plongeur de sortie (12), ladite première armature étant constituée d'un premier rouleau qui vient en prise de rotation avec le filetage hélicoïdal mais qui ne se déplace pas axialement le long de l'axe (14) du plongeur de sortie de sorte que la rotation de la première armature amène le premier rouleau (32) à tourner dans le filetage hélicoïdal du plongeur de sortie (12) en amenant ainsi le plongeur de sortie à se rétracter dans ou à s'étendre du boîtier (20);
un deuxième moteur électrique (30) fixé dans ledit boîtier, ledit deuxième moteur réalisant un deuxième stator (26) autour du plongeur de sortie et une deuxième armature (28) dans le deuxième stator qui tourne autour de l'axe du plongeur de sortie (12), ladite deuxième armature étant constituée d'un rouleau qui vient relâchablement en prise de rotation avec le filetage hélicoïdal mais qui ne se déplace pas axialement le long de l'axe du plongeur de sortie (14) de sorte que la rotation de la deuxième armature amène le deuxième rouleau à tourner dans le filetage hélicoïdal du plongeur de sortie (12), en amenant ainsi le plongeur de sortie à se rétracter dans ou à s'étendre du boîtier (20); et
un mécanisme de libération d'armature (40) fonctionnellement couplé à au moins un parmi le premier rouleau et le deuxième rouleau apte à libérer le premier ou deuxième rouleau du plongeur de sortie (12) afin de découpler l'armature correspondante (28) du filetage hélicoïdal du plongeur de sortie lors de la défaillance du moteur correspondant (24, 30),
où lesdits premier et deuxième moteurs (24, 30) sont des moteurs pas à pas.

2. Actionneur linéaire à commande électrique selon la revendication 1, comprenant en outre un troisième moteur électrique (34) fixé dans ledit boîtier (20), ledit troisième moteur (34) réalisant un troisième stator autour du plongeur de sortie et une troisième armature dans le troisième stator qui tourne autour de l'axe du plongeur de sortie, ladite troisième armature étant constituée du troisième rouleau (32) qui vient relâchablement en prise avec le filetage hélicoïdal (18) mais qui ne se déplace pas axialement le long de l'axe du plongeur de sortie, ladite troisième armature étant supportée de manière à empêcher son mouvement axial le long de l'axe du plongeur de sortie tout en permettant sa rotation autour de l'axe du plongeur de sortie,
la rotation de la troisième armature amène le troisième rouleau à tourner dans le filetage hélicoïdal du plongeur de sortie en amenant ainsi le plongeur de sortie (12) à se rétracter dans ou à s'étendre du boîtier lorsque la troisième armature est mise en prise avec la surface filetée du plongeur de sortie; et
au moins un mécanisme de libération d'armature, fonctionnellement couplé à au moins un parmi la première armature, la deuxième armature et la troisième armature apte à libérer le premier, deuxième ou troisième rouleau (32) du plongeur de sortie (12) afin de découpler l'armature correspondante du plongeur de sortie.

3. Actionneur linéaire à commande électrique selon la revendication 1 ou 2, dans lequel ledit plongeur de sortie cylindrique (12) possède une extrémité de sortie qui est distale au boîtier (20) et où ledit actionneur linéaire à commande électrique comprend en outre au moins un parmi:
un tourillon (60) dont le déplacement linéaire provoque la rotation d'une partie de machine;
une surface de commande pour un aéronef;
une roue apte à être dirigée pour un véhicule;
un élévateur; et
une porte;
couplée à l'extrémité de sortie du plongeur de sortie (20).

4. Actionneur selon l'une quelconque des revendications précédentes, comprenant un système de commande adaptatif de détection de couple (TSAC) (36) pour surveiller le couple du module moteur des moteurs électriques (24, 30) et pour produire un signal d'instruction de sortie de prise afin d'initier le découplage d'une armature du plongeur de sortie (12) lorsque le couple dans le moteur électrique respectif est à l'extérieur d'une plage de couple de moteur autorisée.

5. Aéronef comprenant:
a) deux ailes, chacune comportant une surface de vol apte à être commandée par l'actionneur;
b) un fuselage auquel les deux ailes sont fixées;
c) une section de queue attachée au fuselage, comportant au moins une surface de vol apte à être commandée par l'actionneur;
d) au moins un moteur couplé à au moins un parmi: les deux ailes; le fuselage; et la section de queue; et
e) un actionneur à commande électrique, tolérant aux défauts selon l'une quelconque des revendications précédentes, fonctionnellement couplé à au moins une des surfaces de vol aptes à être commandées par l'actionneur.

6. Véhicule comprenant:
a) un châssis;
b) au moins une roue apte à être dirigée couplée au châssis;
c) un actionneur à commande électrique, tolérant aux défauts selon l'une quelconque des revendications 1 à 4 fonctionnellement couplé à au moins une roue apte à être dirigée.

7. Procédé de réalisation d'une tolérance aux défauts à un actionneur linéaire comprenant:
réaliser l'actionneur linéaire à commande électrique tel que revendiqué dans l'une quelconque des revendications 1 à 4;
entraîner le plongeur de sortie (12) en utilisant au moins le premier et le deuxième moteur électrique (24, 30);
lors de la défaillance du premier moteur (24), découpler mécaniquement le premier moteur du plongeur de sortie (12) en libérant le premier rouleau de la prise avec le filetage hélicoïdal du plongeur de sortie; et
continuer à faire fonctionner l'actionneur en utilisant le deuxième moteur (30).

8. Procédé de réalisation d'une tolérance aux défauts à un actionneur linéaire, comprenant:
réaliser l'actionneur linéaire à commande électrique tel que revendiqué dans l'une quelconque des revendications 1 à 4;
entraîner le plongeur de sortie (12) en utilisant le premier moteur (24);
lors de la défaillance du premier moteur (24), découplé mécaniquement le premier moteur du plongeur de sortie en sortant le premier rouleau de la prise avec le filetage hélicoïdal du plongeur de sortie;
coupler le deuxième moteur (30) au plongeur de sortie; et
continuer à faire fonctionner l'actionneur en utilisant le deuxième moteur.
